# EUROPEAN PATENT APPLICATION

(11) **EP 4 495 190 A1**
(43) Date of publication of application: **22.01.2025**
(21) Application number: 23382758.3
(22) Date of filing: 21.07.2023
(51) Int. Cl.: C09D 1/02, C09D 5/24, C09D 7/61, C08K 3/04

(54) **NANOPARTICLE DISPERSIONS AND COMPOSITE NANO STRUCTURED MATERIALS**

(71) Applicant: Sima, Marc, 07340 Alaro (ES); Licitar, Antonijo, 10000 Zagreb (HR)
(72) Inventor: Sima, Marc, 07340 Alaro (ES); Licitar, Antonijo, 10000 Zagreb (HR)
(74) Representative: Bardehle Pagenberg S.L.

(57) **Abstract**

The present disclosure relates to an electrically conductive nanoparticle dispersion and an electrically conductive composite nano structured material, CNSM. A CNSM comprises a liquid solvent having a pH above 8, a plurality of electrically conductive nanoparticles, and a binder, wherein the binder forms a matrix in which the electrically conductive nanoparticles are arranged and separated among them. Methods for heating using such a CNSM or dispersion are also provided.

## Description

### FIELD

The present disclosure relates to electrically conductive nanoparticle dispersions and electrically conductive composite nano structured materials. The dispersions and the materials may be used for heating, sensing and shielding. The dispersions and the materials may replace wiring for lighting and for power delivery in some examples.

### BACKGROUND

Electrically conductive paints are known in the art. An electrically conductive paint may for example include a liquid dispersion medium and particles having a diameter of tens of microns. When an electrically conductive paint is applied to a surface of a body and electric current is passed through the paint, the paint heats by Joule heating, which is also known as resistive heating or resistance heating. These terms are used interchangeably herein. The power of heating P generated by such a paint is given by the product of the electrical resistance R of the paint and the square of electrical current applied I²: P = R·I². The temperature increase that can be achieved with resistance heating is therefore limited e.g. by the resistance of the electrically conductive paint and the electric current applied.

The present disclosure provides composite nanostructured materials and dispersions which can overcome the limitations of resistance heating and provide a high heating efficiency. The composite nanostructured materials and dispersions can also be used for sensing and for shielding. Other uses are also possible. For example, they may replace wires for power distribution, they may be used as current collectors for batteries or supercapacitors, and they may be used in electronic applications for print boards and chip connections.

### SUMMARY

In an aspect of the present disclosure, a composite nano structured material, CNSM, is provided. The CNSM comprises a liquid solvent having a pH above 8, a plurality of electrically conductive nanoparticles, and a binder. The binder forms a matrix in which the electrically conductive nanoparticles are arranged and separated among them.

Accordingly, the electrically conductive nanoparticles are arranged within the binder, which keeps them separated. Without wishing to be bound by theory, the separation enables that, when subjected to an electric field, heating arises due to quantum effects associated to the interaction of the electric field with the electrically conductive nanoparticles. This heating mechanism is different from resistance heating, as explained below. The composite nano structured material may also be referred to as composite nano structured heating material, CNSHM.

A pH above 8, optionally above 9, e.g. between 9 and 12, may improve the dispersion and the electrical conductivity of the nanoparticles. A more homogeneous spatial distribution of the nanoparticles within the CNSM can be obtained. The probability of having hot spots, i.e. regions which may over heat, may be reduced. Heating may be more uniform, and energy transmission and heating may be more efficient. As explained further below, the pH of a CNSM may vary for example depending on an intended application and/or on a surface on which the CNSM is to be applied.

A liquid solvent having a pH above 8 may help to create a matrix in which the nanoparticles are arranged when the solvent interacts with the binder. The matrix may in a certain way enclose or retain the nanoparticles and may separate them. The matrix may for example have channels or holes in which the nanoparticles are arranged. As the material of the matrix separates the nanoparticles, heating through quantum effects is promoted and enhanced when the CNSM is subjected to an external electric field. The inner structure of the matrix, e.g. its channels and/or holes, affects how the nanoparticles interact with each other and therefore the quantum heating effects.

Due to the matrix and the electrically conductive nanoparticles within the matrix, the CNSM has a high electrical conductivity, in particular due to the nanoparticles, and a low electrical resistance, in particular due to the matrix. The CNSM is capable of producing heat due to quantum effects arising when applying an electric field to the CNSM.

The interaction of the electric field with the electrons of the electrically conductive nanoparticles may create a voltage difference on the surface of the CNSM. Such change may e.g. be observed by detecting a change in the magnetic field near the surface of the of the CNSM or by detecting a change of the charge in the surface of the CNSM.

Every electron has a quantum mechanical property called spin, which determines how the electrons will interact with other electrons, as well as with external electric and magnetic fields. When an electric field is applied to the CNSM, and therefore to the electrically conductive nanoparticles of the CNSM, the spins of the electrons of the electrically conductive nanoparticles tend to align with the applied electric field. The electrons tend to follow the spin movement, i.e. the electrons may start to rotate "dragged" by the spin aligning with the electric field. Heat through friction may therefore be generated.

Electrons occupy energy levels, generally referred to as orbitals, around the nucleus of an atom. When an electric field is applied to the CNSM, and therefore to the electrically conductive nanoparticles of the CNSM, the energy of the electrons can be increased. The capability of movement of the electrons and their kinetic energy may therefore increase, and the electrons may be able to jump to higher energy orbitals. An increase in electron movement and electron jumps may contribute to electron transport through the material and to heating, e.g. as the free electrons collide with other atoms, transferring kinetic energy to them and therefore causing the CNSM to heat up.

Electron jumping between orbitals and associated changes of kinetic energy may also modify the arrangement of the electrons in the CNSM and change the electronic properties of the CNSM, similar to a phase transition. This may increase the electrical conductivity of the CNSM.

Electron jumping between orbitals and associated changes of kinetic energy may in addition promote quantum tunneling, which is a phenomenon in which the electrons can go through potential barriers despite lacking the energy to do so classically. By quantum tunnelling, the electrons can transfer energy to electrons in other electron orbitals. This may result in efficient heat generation in the CNSM.

As the electrically conductive nanoparticles are arranged in the matrix, an applied electric field may affect a first nanoparticle particle. But the changes experienced by the first nanoparticle may also affect the electric field seen by neighboring nanoparticles, and *vice versa.* That is to say, the behavior of the electrically conductive nanoparticles arranged in the matrix may not only depend on the external applied electric field, but also on how other neighboring nanoparticles react. This influence between electrically conductive nanoparticles is also enabled by the inner structure of the matrix, which separates the nanoparticles.

In this manner, the heating performance with an CNSM is not related to resistance of the CNSM to electrons passing through it like in common heaters relying on resistance heating, but rather to the inner structure of the CNSM and how the electrically conductive nanoparticles can interact with an external electric field and among them when they are arranged in the matrix. Heat transfer through the CNSM may be particularly high, and it may specifically be better than heat transfer through a material which is heated by Joule heating. This heating mechanism, in which a CNSM with a very low resistance is used, can be significantly more efficient than conventional heating methods which rely on the Joule effect and generate heat through resistance to the passage of electrons.

The electrical resistance per square centimeter of the CNSM may for example be between 0.03 Ω/cm² and 14 Ω/cm² when applied on a surface. The electrical resistance may vary depending on the roughness of the surface on which the CNSM is applied, as well as on the thickness of the CNSM when applied, e.g. a number of layers of CNSM applied on the surface. As the heating described and shown herein is different from heating with the Joule effect, the electrical resistance of the CNSM may preferably be below 1 Ω/cm². Other values of electrical resistance of a CNSM applied on a surface may of course be possible. The CNSM coating may therefore cover a large surface while having a small thickness, and the CNSM may achieve a high heating performance. A low electrical resistance per square centimeter and a high surface area to volume ratio (due to a small thickness of the CNSM coating) may help to increase the heating achieved with a CNSM.

It is noted that within the matrix, some electrically conductive nanoparticles may form groups. I.e., not every electrically conductive nanoparticle needs to be separated from the other electrically conductive nanoparticles. Small aggregation may occur within the holes or channels of the matrix. But in general, the electrically conductive nanoparticles will be well dispersed within the matrix.

The electron rotation for trying to align the spin with an applied electric field and the electron jumps to higher energy orbitals in response to the applied electric field may create a voltage difference in the CNSM. Electron transport through the CNSM, quantum tunneling and changes in the electronic properties of the CNSM may be promoted, which may help to create the voltage difference and to generate heat.

Quantum and atomic effects that may contribute to more efficient heating in the CNSM may include the quantum confinement effect, which can result in enhanced thermal conductivity and improved energy conversion efficiency; surface plasmon resonance, which can result in increased absorption, but also radiation, of electromagnetic energy, leading to more efficient heating; and phonon scattering reduction, which may lead to improved thermal conductivity.

Throughout this disclosure, nanoparticles may be understood as particles having at least one of their dimensions in the range of 1 nm - 100 nm. For example, all their dimensions, e.g. height, width and thickness, may be between 1 nm and 100 nm, e.g. between 1 nm and 50 nm, e.g. between 1 nm and 20 nm. The electrically conductive nanoparticles may for example be provided in powder form.

A matrix may herein be regarded as a material in which the electrically conductive nanoparticles are arranged, and which separates the nanoparticles. The matrix may have holes, recesses and/or channels in which the nanoparticles are arranged. The material of the matrix separates the nanoparticles. In some examples, an average separation of the electrically conductive nanoparticles of the CNSM may be between 1 and 15 nm, e.g. between 2 and 10 nm. Such an average separation may help to promote the jumping of the electrons between orbitals and other effects, e.g. quantum tunneling.

Throughout this disclosure, a binder may be understood as a material that produces or promotes cohesion of the electrically conductive nanoparticles when in contact with the electrically conductive nanoparticles. The binder may help to form the matrix in which the nanoparticles are arranged. The binder may herein be regarded as different from the liquid solvent. For example, a CNSM may comprise distilled water with a pH above 8 as liquid solvent, electrically conductive nanoparticles, and natrium silicate as binder. Such CNSM may be applied to a surface of a material.

Or for example, the CNSM may be formed when a dispersion comprising distilled water with a pH above 8, and in particular above 9, as liquid solvent and electrically conductive nanoparticles is applied to a surface of a material which dissolves under such pH such as glass. I.e., the dispersion of the liquid solvent and the electrically conductive nanoparticles may attack the glass and form silica-oxygen (Si-O) bonds, leading to the dissolution of the glass surface. The glass then acts as binder. As the glass is dissolved, a matrix which separates and retains the nanoparticles may be created. In other words, the binder may be an outer portion of a material on which the liquid solvent and the plurality of electrically conductive nanoparticles, e.g. a dispersion formed by the liquid solvent and the plurality of electrically conductive nanoparticles, is applied. Such an outer portion of the material may be configured to dissolve when in contact the dispersion. The outer portion of the material/binder may comprise one or more of silicon, glass, aluminum, magnesium, calcium, ceramic, zeolite and clay.

The liquid solvent may be water, and in particular distilled water. Distilled water may be understood as water which does not include any impurity. Distilled water does not include any chemicals or contaminants, for example distilled water does not include microorganisms and minerals.

The liquid solvent may be free from chemicals. Such a solvent, e.g. distilled water, does not have chemical ingredients or any type of additive inside. If additives were added to the distilled water to increase the pH of the distilled water, this may change the properties of the nanoparticles when mixed with the water. For example, the presence of chemicals in the water may change the spatial distribution and/or the size distribution of the electrically conductive nanoparticles. The presence of chemicals may also change the electrical conductivity of the nanoparticles. A liquid solvent free from chemicals may therefore be advantageous.

Still in other examples, other liquid solvents different from water may also be used.

The pH of the liquid solvent may be above 9 in some examples, e.g. between 9 and 12. A pH in this range may help to create the matrix for arranging the electrically conductive nanoparticles while a good spatial distribution of the nanoparticles is promoted, i.e. the nanoparticles may not tend to agglomerate, and may also help to promote electron movement in the CNSM.

In some examples, e.g. wherein a binder is added to, and mixed with, the electrically conductive nanoparticles and the liquid solvent (before applying the mix to a surface of a material), an excessively alkaline pH may increase the electrically conductivity of the binder, which may reduce electron movement in the CNSM, e.g. as electron jumping between orbitals is less promoted. In such a situation, electrically non-conductive materials may be added to promote electron movement, e.g. to promote the electron jumps between electron orbitals, in the CNSM. But avoiding an excessively alkaline pH may help to avoid adding such additional material and may therefore allow to have a simpler CNSM and a more homogeneous and controlled spatial distribution of the electrically conductive nanoparticles.

The binder may be electrically non-conductive. For instance, the binder may be a non-metallic binder, e.g. a non-electrically conductive polymer. An electrically non-conductive binder may help to promote the electron jumps. The higher the electrical conductivity of the binder, the less the electron jumps may be promoted.

The percentage of mass of the electrically conductive nanoparticles may be from 1 % to 80% of the mass of the sum of the components of the CNSM, e.g. the sum of the liquid solvent, the electrically conductive nanoparticles and the binder. If additional elements were included in the CNSM, the previous sum would take into account such additional elements. In some of these examples, the percentage of mass of the electrically conductive nanoparticles may be from 1% to 50% of the mass of the sum of the components of the CNSM, optionally from 1 % to 30 %, optionally from 1% to 20%. As the heating mechanism according to the present disclosure is different from resistance heating, the amount of electrically conductive nanoparticles may be reduced.

Heating in this manner, instead of relying on resistance heating, may also allow to decrease the thickness of the CNSM. For example, if the CNSM is applied to a surface, e.g. to a wall or a ceiling, a thin layer can be applied. The thickness of the applied layer may be much thinner than a conventional heating paint which heats by resistance heating. In some examples, the layer of a CNSM which has been dried, e.g. after evaporating the liquid solvent, may have a thickness below one micrometer, e.g. of tens of nanometers. In some of these examples, a layer may have a thickness below 100 nm, and even below 10 nm. A layer of CNSM which has been dried may have a thickness above 2 nm.

In a further aspect of the disclosure, a dispersion is provided. The dispersion comprises a liquid solvent which has a pH above 8, optionally above 9, e.g. between 9 and 12, and a plurality of electrically conductive nanoparticles. The dispersion is configured to create a matrix in which the electrically conductive nanoparticles are arranged and separated among them when the dispersion contacts a binder. The dispersion may in particular be configured to create the matrix by dissolving an outer portion of a material when the dispersion is applied to the material. In the latest case, the outer portion of the material is the binder.

The explanations regarding the first aspect apply to this aspect as well. Depending on which material surface the dispersion of the electrically nanoparticles and the liquid nanoparticles is to be applied, a binder may be dispensed with. For example, if an outer portion of the material on which the dispersion is to be applied reacts and dissolves under the dispersion, then the dispersion is sufficient to create the matrix for the electrically conductive nanoparticles. Such materials may e.g. have an outer surface comprising silicon, glass and others. The outer portion of the material may therefore be seen as the binder which forms the matrix. A high alkalinity of the dispersion may help to dissolve the surface of the material.

In other examples, a binder such as a non-metallic binder, e.g. a non-electrically conductive polymer, may be provided with the liquid solvent and the electrically conductive nanoparticles. For instance, the plurality of electrically conductive nanoparticles may be added to, and mixed with, the liquid solvent. The binder may then be added. The mixture may form the CNSM, which may then be applied to a surface of material. Alternatively, the liquid solvent and the binder may first be mixed, and then the plurality of electrically conductive nanoparticles may be added.

This aspect can be combined with the previous aspect and also with the next aspect.

In a further aspect of the disclosure, a method is provided. The method comprises applying a CNSM as described throughout this disclosure or the dispersion comprising the plurality of electrically conductive nanoparticles and the liquid solvent, to a surface of a material. The method further comprises applying an electric field to the CNSM or to the dispersion.

In this manner, the applied electric field may promote electron jumping and electron rotation. An increase in the kinetic energy of the electrons may promote electron transport, quantum tunneling and/or a change in the electronic properties of the CNSM. Effects such as the quantum confinement effect, surface plasmon resonance and phonon scattering reduction may also help to achieve a more efficient and resistance-free heating.

Applying an electric field may comprise applying a pulsed direct current, DC. Pulsed DC may be periodic and may change in value, but may not change direction. In some examples, squared, rectangular, or triangular pulses may be used. The pulses may be applied with a frequency which matches a natural frequency of the electrically conductive nanoparticles. In this way, the effects of electron jumping and rotation may be enhanced, and therefore heating may also be enhanced.

Although pulsed DC may be used to apply the electric field with a frequency of resonance of the electrically conductive nanoparticles, alternating current, AC, may also be used to apply the electric field. The frequency of application of the alternating current may be tuned for achieving resonance.

The CNSM or the dispersion may be applied to a variety of surfaces. It may e.g. be applied to one or more of a wall, a ceiling and a floor. In some examples, brush painting, roller painting or spraying may be used to apply the CNSM or the dispersion. For example, the CNSM may be applied with a brush directly to a wall or to a support which is attached, or to be attached, to the wall. The dispersion may be sprayed over a surface in some examples.

Although an electric field may be applied to the CNSM or the dispersion for heating, the CNSM or the dispersion may have other uses. For example, the CNSM may be used for shielding from static electricity and sparking, e.g. if the CNSM is applied on a surface of an electronic component. It may also be used to shield or protect from corrosion, e.g. by preventing or delaying electrical contact between two metals which causes a galvanic reaction. The CNSM may also be used as a sensor, for example for monitoring the status of a structure on which the CNSM (or the dispersion) is applied.

### BRIEF DESCRIPTION OF THE DRAWINGS

Figure 1 shows an example of a heating experiment.
Figure 2 shows a thermal image of another example of heating experiment.
Figure 3 schematically illustrates the connections and elements for the experiments of figures 1 and 3.
Figure 4 shows a thermal image of another example of heating experiment.
Figure 5 shows a setup of another example of heating experiment.
Figure 6 schematically illustrates the connections and elements for the experiment of figure 5.
Figure 7 shows a flow chart diagram of an example of a method for heating.

### DETAILED DESCRIPTION OF EXAMPLES

Reference now will be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

In one aspect of the present disclosure, a composite nano structured material, CNSM, is provided. The CNSM comprises a liquid solvent having a pH above 8, a plurality of electrically conductive nanoparticles, and a binder. The binder forms a matrix in which the electrically conductive nanoparticles are arranged and separated among them. The liquid solvent may be water, e.g. distilled water. The liquid solvent may be free from chemicals.

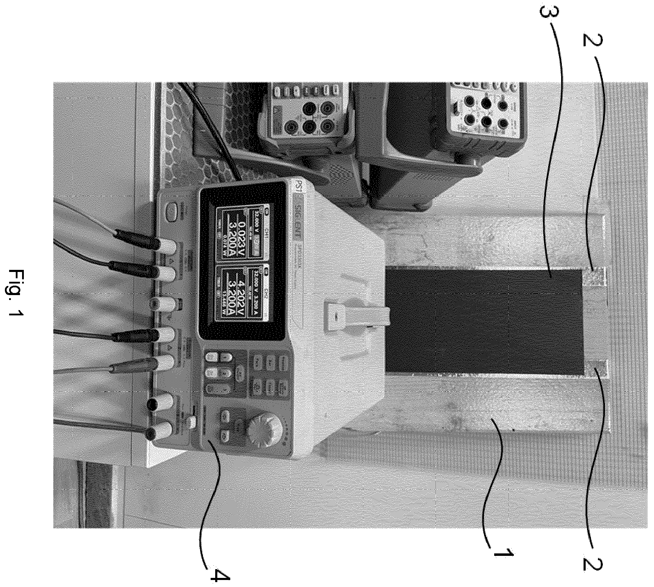

Figure 1 shows an example of a first heating experiment. In this experiment, a CNSM 3 is applied on a surface of a material which is a ceramic tile 1. The tile 1 has a length of 60 cm, a width of 30 cm and a thickness of 1.2 cm. Two copper strips 2A, 2B have been arranged in a parallel manner on the surface of the tile 1 for acting as electrical contacts. The CNSM 3 has been sprayed on the surface of the tile 1, between the copper contacts 2 and partially over them as well. The CNSM 3 extended over a surface of 20 cm x 40 cm. Figure 1 also shows a laboratory DC power supply 4.

The CNSM 3 used in the example of figure 1, and also in the next experiments, comprises 50 g of distilled water with a pH of 12 as a liquid solvent, 25 g of graphite/graphene nanoparticles (graphite nanopowder commercially offered by Nanom company (now Quanto Nano), with product reference NMCGT7920 was used; the nanoparticles included at least 5% of graphene) as the plurality of electrically conductive nanoparticles, and 25 g of a water dispersion of natrium silicate (Na₂SiO₃) at a concentration of 30% (in volume) as a binder. In mass, the plurality of electrically conductive nanoparticles (25 g) represents the 25% of the total mass of the CNSM (50 g + 25 g + 25 g).

The resistance of the CNSM is 30 Ω/cm². It is noted that by adding for example carbon black to the above CNSM composition, the resistance can go below 1 Ω/cm². Electrical resistances between 0.03 Ω/cm² and 14 Ω/cm², e.g. between 0.3 Ω/cm² and 9 Ω/cm², have shown a particularly good heating performance.

In the first experiment, shown in figure 1, the surface temperature of the portion of the ceramic tile 1 coated with the CNSM 3 rose from an ambient temperature of 11 °C to a temperature of 20 °C after 15 minutes. In this first experiment, a DC voltage of 4.2 V and a current of 3.2 A were applied.

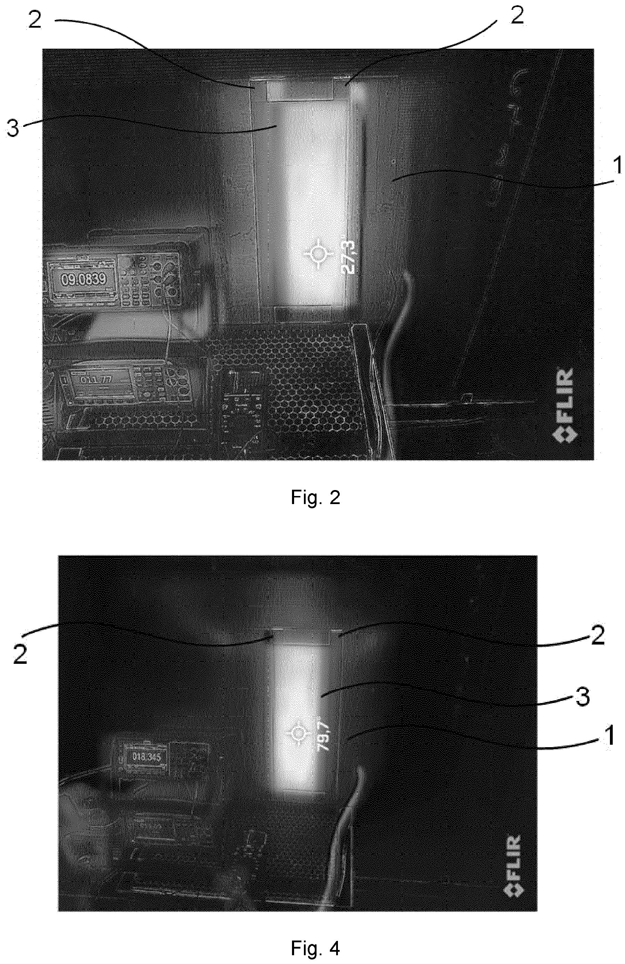

The same ceramic tile 1, copper strips 2 and CNSM 3 were used in a second heating experiment. A thermal image of the second heating experiment taken with a thermal camera is shown in figure 2. In this experiment, the surface temperature of the portion of the ceramic tile 1 coated with the CNSM 3 increased from an ambient temperature of 11 °C to a temperature of 27.3 °C by applying a DC voltage of 9.1 V and a current of 11.8 A during 5 minutes. The region in which the 27.3 °C were measured can be seen in figure 2.

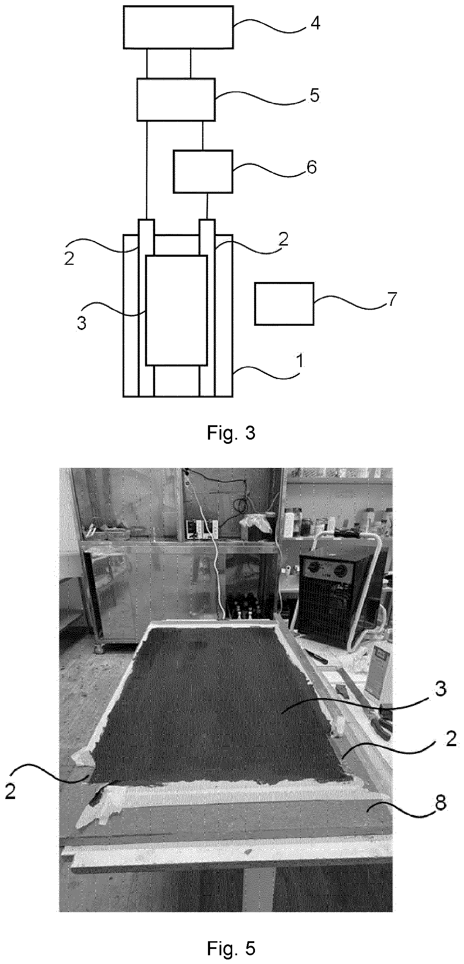

The elements and connections used in the first experiment and the second experiment are schematically shown in figure 3. This figure schematically illustrates a tile 1 on which two copper strips 2 are arranged. The CNSM 3 is applied between the strips. A laboratory DC power supply 4 is used. The DC power supply 4 is electrically connected to a voltmeter 5. The voltmeter 5 is connected to a first copper strip and to an ammeter 6. The ammeter 6 is connected to the other copper strip. A thermal camera 7 for measuring temperature is also shown.

In a third experiment, of which a thermal image is shown in figure 4, AC voltage from a wall socket (220 V, 50 Hz, 16 A) is rectified to a DC voltage of 18.3 V. The current supplied to the copper strips is 11.7 A. The temperature of the surface of the tile increased from an ambient temperature of 11 °C to a temperature of 79.7 °C in the hottest region in less than 5 minutes.

In a fourth experiment, whose setup is shown in figure 5, a hemp clay board 8 which may be used as a construction material for insulating walls and which has a length of 1.5 m and a width of 80 cm was used. Two copper strips 2 were arranged on it in a parallel manner to act as electrical contacts.

In this experiment, the composition of the CNSM 3 further included 12 g of SiO₂ nanoparticles (SiO₂ was also provided by Nanom company (now Quanto Nano), product reference NMSIO22321) and 100 g more of the water dispersion of natrium silicate (Na₂SiO₃) at a concentration of 30% (in volume). It should be noted that natrium silicate has thermal insulation properties. In addition, 3 g of Al nano flakes and 10 g of nano activated carbon were added to the composition of the CNSM 3 for increasing the reflection and the radiation of the CNSM from the surface of the board.

An AC voltage of 130 V transformed from a wall socket providing an AC voltage of 220 V, 50 Hz and 16 A, and a current of 3 A were applied to the copper strips 2. The initial ambient temperature was 11 °C, which after 15 minutes increased to 60 °C in the surface of the board 8 on which the CNSM 3 was applied between the copper strips 2.

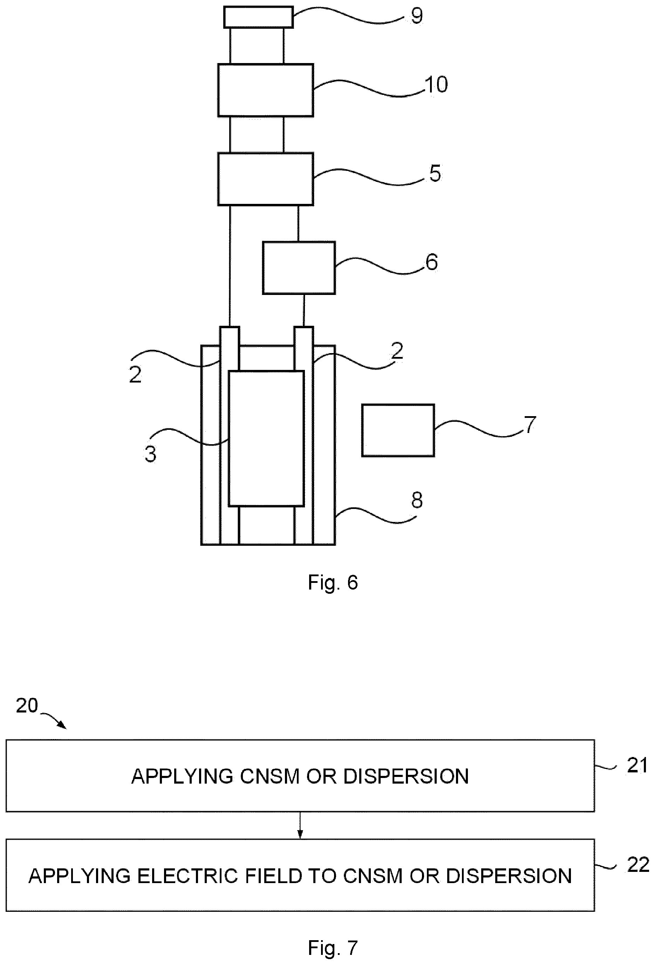

The connections and elements used for the fourth experiment are schematically illustrated in figure 6. This figure shows a wall socket 9, to which a variable transformer 10 is connected for varying the amplitude of the AC voltage. A voltmeter 5 is connected to the variable transformer 10. The voltmeter 5 is then connected to a copper strip 2 and to an ammeter 6. The ammeter 6 is then connected to the other copper strip 2. A thermal camera 7 is also shown.

In some examples, the frequency of the AC voltage may be varied. To this end, a voltage and frequency amplifier and frequency generator may for example be connected to the copper strips 2 in the setup of figure 6. In other examples, the frequency may be varied in other suitable manners known in the art.

As can be seen from the above experiments, the heat that can be achieved by using the CNSM may be much higher than the heat that can be obtained with conventional resistance heating. With a CNSM, higher temperatures can be achieved with less applied power. It is also noted that, e.g. depending on the experimental setup and/or the materials used, a temperature increase over 1500 °C or 2000 °C may be reached, provided that materials that can sustain such temperatures are used.

The above examples are only illustrative, and other CNSMs and/or other experimental setups may be used. An electric field may be generated in a different manner as in the above experiments, and the electric wires may be omitted. For example, a time varying magnetic field may be used to generate an electric field.

The electrically conductive nanoparticles may comprise one or more of graphite, graphene, copper, aluminum, nickel, iron, magnetite, carbon and carbon black.

The plurality of electrically conductive nanoparticles may in some examples comprise ferromagnetic, e.g. iron, and/or ferrimagnetic, e.g. magnetite, nanoparticles. One or more permanent magnets may be used to orient the magnetic moments of the ferromagnetic and/or ferrimagnetic nanoparticles of the CNSM or the dispersion. Once oriented, an alternating magnetic field may be applied for enhancing heat production due to hysteresis losses.

The electrically conductive nanoparticles may in some examples comprise an electrically non-conductive core and an electrically conductive coating. For example, the electrically conductive nanoparticles may comprise a silica core and a metallic coating, e.g. a graphite coating.

A binder may be electrically non-conductive. The binder may be a non-metallic binder, for example an electrically non-conductive polymer. Natrium silicate (Na₂SiO₃), polyvinyl acetate (PVA), epoxy resin, polyethylene, polyurethane and others may be suitable binders. The binder may be an organic binder as well as an inorganic binder. The binder may be dispersed in a liquid solvent in some examples, as shown in the composition of the CNSM of the previous experiments.

If the binder is an outer portion of a material on which the mix of the liquid solvent and the plurality of electrically conductive nanoparticles are applied, i.e. it the outer portion of the material is configured to dissolve when in contact with the binder, the binder may e.g. comprise one or more of silicon, glass, aluminum, magnesium, calcium, ceramic, zeolite and clay.

In a further aspect of the disclosure, a method 20 is provided. The method is shown in the flowchart of figure 7. The method 20 comprises, at block 21, applying a CNSM as described herein or a dispersion as described herein to a surface of a material. The method further comprises, at block 22, applying an electric field to the CNSM or to the dispersion.

An electric field may be applied in several ways. In some examples, electric wires may be provided between a power source and the CNSM or the dispersion for creating an electric field. In other examples, electric wires may be dispensed with. In such examples, a time varying magnetic field may for example be used for generating an electric field. A plurality of movable magnets may be arranged below or on the back of a material on which the CNSM or dispersion has been applied in some examples. A motor may move the magnets. In other examples a ferrofluid may be pumped below or on the back of a material on which the CNSM or dispersion has been applied. The ferrofluid may also generate heat. Electromagnetic fields from microwave radiation may also be used in some situations, e.g. in applications where living beings are not involved.

U shaped magnet (electro or permanent, etc.) with a driven disc with nano magnetic applied material on surface in between U-shaped magnet flow arrangement that can generate heating and cooling).

Both alternating current and direct current may be used to generate an electric field. The frequency of the applied electric field may be tuned such that resonance is achieved. Heating may be enhanced by applying an electric field with a frequency that matched a natural frequency of the electrically conductive nanoparticles. In some examples, pulse-width modulation may be used. In some examples, frequency modulation may be used. Pulses may have different shapes, such as squared, rectangular, sinusoidal, triangular or sawtooth.

An applied voltage may be selected appropriately. A wide range of voltages may be applied. Voltage may vary between 1 V and 10 kV. Voltage may e.g. be 50 V, 120 V, 220 V, 380 V or 5 kV.

A wide range of frequencies may also be applied. Frequency may e.g. vary between 50 Hz and 10 MHz.

The CNSM or the dispersion may be applied to a variety of surfaces, for example to one or more of a wall, a ceiling and a floor. The application may be direct as well as indirect. For indirect application, the CNSM or the dispersion may e.g. be applied on a support, and the support may be attached to e.g. a wall or a ceiling. In some examples, silicon nitride may be used as a support, or a silicon nitride layer may be applied on the support, such that this layer separates the support and the CNSM. Silicon nitride may act as a heat insulator such that heat is not transferred, or barely transferred, to the support.

In some examples, the CNSM or the dispersion may be directly applied on a electrically non-conductive surface. In other examples, the CNSM or the dispersion may be applied on an electrically insulating layer. The insulating layer may e.g. be applied on a metal or on an electrically conductive surface. The insulating layer may e.g. comprise SiO₂ nanoparticles and Na₂SiO₃ dispersed in electrically non-conductive water (e.g. because it has been de-ionized). Still in other some examples, the CNSM or the dispersion may be applied on a heat insulating layer, and a heat conducting layer may be applied on the CNSM lor dispersion layer. Heat may be emitted through the heat conducting layer. Still in other some examples, the CNSM or the dispersion may be sandwiched between two heat conducting layers. For example, a heat conducting layer may comprise glass. In this type of examples, heat may be generated through both heat conducting layers. The CNSM may also be arranged between two metallic layers in other examples. A layer of electrically insulating material, e.g. including Na₂SiO₃, may be provided between the CNSM layer and each metallic layer.

Depending on the application, the CNSM may be dried. For example, the liquid solvent may be removed at least in part after the CNSM or the dispersion has been applied to a surface.

The CNSM and/or the dispersion may also be applied for example to heating convectors, to blow driers, to ceramic or clay heating plates which may e.g. be used to heat water, to water boilers, to bricks or to styrofoam insulation for heating buildings or houses, to textiles and clothes, to cellulose sheets and wooden materials able to withstand high temperatures, etc. Further applications in which heating is required may be possible.

In some examples, a heating device, e.g. in the form of a heating cylinder, may be provided. The device may have a different shape, e.g. a different cross-section, in other examples. The cross-section may e.g. be square or rectangular instead of circular. The heating cylinder may comprise a heating insulating outer layer, e.g. a ceramic layer. Going radially inwards, the heating layer may then comprise a CNSM or dispersion layer, an electrically insulating layer and a heat conductive inner layer, e.g. a metallic layer. A fluid such as water may be passed through the cylinder and the water may be heated due to the CNSM or dispersion layer.

A fluid may also be heated in other manners. For instance, parallel layers of a certain material may be provided. The layers may be separated by a gap, such as e.g. air may flow along and between these layers. The CNSM may be applied to one or both faces of these layers such that the air (or other fluid) may be heated when moving along these layers. The layers may be metallic in some examples, e.g. they may comprise aluminum. An insulation layer may be provided between the metallic layers and the CNSM. The insulating layer may for example comprise SiO₂ and Na₂SiO₃.

The CNSM and the dispersion may also have other applications such as shielding and sensing. In some examples, the CNSM may be used for shielding from static electricity and sparking, e.g. if the CNSM is applied on a surface of an electronic component. The CNSM may also be used to shield or protect from corrosion, e.g. by preventing or delaying electrical contact between two metals which causes a galvanic reaction. The CNSM or the dispersion may also be used as a sensor, for example for monitoring the status of a structure on which the CNSM (or the dispersion) is applied. A ground level or reference of a parameter may be defined. For example, a reference temperature, electric conductivity, electrical resistance of other may be defined. By measuring or calculating how one or more of these or other suitable parameters vary, the CNSM may be used as a sensor.

This written description uses examples to disclose a teaching, including the preferred embodiments, and also to enable any person skilled in the art to put the teaching into practice, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A composite nano structured material, CNSM, comprising:
a liquid solvent having a pH above 8;
a plurality of electrically conductive nanoparticles; and
a binder, wherein the binder forms a matrix in which the electrically conductive nanoparticles are arranged and separated among them.

2. The CNSM of claim 1, wherein the liquid solvent is water, and in particular distilled water.

3. The CNSM of claim 1 or claim 2, wherein the solvent is free from chemicals.

4. The CNSM of any of the preceding claims, wherein the solvent has a pH between 9 and 12.

5. The CNSM of any of the preceding claims, wherein the electrically conductive nanoparticles comprise one or more of graphite, graphene, copper, aluminum, nickel, iron, magnetite, carbon and carbon black.

6. The CNSM of any of the preceding claims, wherein the binder is electrically non-conductive.

7. The CNSM of claim 6, wherein the binder is a non-metallic binder, in particular an electrically non-conductive polymer.

8. The CNSM of claim 6 or claim 7, wherein the binder is an outer portion of a material on which the liquid solvent and the plurality of electrically conductive nanoparticles are applied.

9. The CNSM of claim 8, wherein the outer portion of the material is configured to dissolve when in contact with the binder, in particular wherein the binder comprises one or more of silicon, glass, aluminum, magnesium, calcium, ceramic, zeolite and clay.

10. A dispersion comprising:
a liquid solvent having a pH above 8;
a plurality of electrically conductive nanoparticles; wherein
the dispersion is configured to create a matrix in which the electrically conductive nanoparticles are arranged and separated among them when the dispersion contacts a binder, and in particular is configured to create the matrix by dissolving an outer portion of a material when the dispersion is applied to the material.

11. A method comprising:
applying the CNSM of any of claims 1 - 7 or the dispersion of claim 10 to a surface of a material; and
applying an electric field to the CNSM or to the dispersion.

12. The method of claim 11, wherein applying an electric field comprises applying a pulsed direct current.

13. The method of claim 11 or claim 12, wherein the electric field is applied with a frequency of resonance of the electrically conductive nanoparticles.

14. The method of claim 11, wherein the electric field is generated by using a time varying magnetic field.

15. The method of any of claims 11 - 14, wherein the CNSM or the dispersion is applied to one or more of a wall, a ceiling and a floor.
